# EUROPEAN PATENT SPECIFICATION

(11) **EP 3 547 026 B1**
(45) Date of publication and mention of the grant of the patent: **29.11.2023**
(21) Application number: 18164630.8
(22) Date of filing: 28.03.2018
(51) Int. Cl.: G03F 7/00

(54) **METHOD FOR PRODUCING A METAL STAMP FOR EMBOSSING A NANO- AND/OR MICROSTRUCTURE ON A METAL DEVICE AS WELL AS USES THEREOF AND DEVICES MADE THEREWITH**
VERFAHREN ZUR HERSTELLUNG EINES METALLSTEMPELS ZUM PRÄGEN EINER NANO- UND/ODER MIKROSTRUKTUR AUF EINER METALLISCHEN VORRICHTUNG SOWIE DEREN VERWENDUNG UND DAMIT HERGESTELLTE VORRICHTUNGEN
PROCÉDÉ DE FABRICATION D'UN TAMPON MÉTALLIQUE POUR LE GAUFRAGE D'UNE NANO ET/OU MICROSTRUCTURE SUR UN DISPOSITIF MÉTALLIQUE AINSI QUE SES UTILISATIONS ET DISPOSITIFS FABRIQUÉS À PARTIR DE CELUI-CI

(43) Date of publication of application: 02.10.2019
(73) Proprietor: CSEM Centre Suisse d'Electronique et de Microtechnique SA, 2002 Neuchâtel (CH)
(72) Inventor: SCHNEIDER, Christian, 4665 Oftringen (CH); LUU-DINH, Angélique, 68100 Mulhouse (FR); SCHNIEPER, Marc, 1213 Onex (CH); KALLWEIT, David, 79115 Freiburg im Breisgau (DE); KRÄHENBÜHL, Roger, 4144 Arlesheim (CH); DE WILD, Michael, 4103 Bottmingen (CH); MAREK, Romy Linda, 8124 Maur (CH)
(74) Representative: Bremi, Tobias Hans

(56) References cited:
- US-A- 5 728 324
- US-A1- 2005 187 339
- US-A1- 2009 325 107
- US-A1- 2010 109 194
- US-A1- 2010 301 004
- US-A1- 2012 297 856
- US-A1- 2017 100 204
- GREER ANDREW I M ET AL: "Increased efficiency of direct nanoimprinting on planar and curved bulk titanium through surface modification", MICROELECTRONIC ENGINEERING, vol. 112, 7 June 2013 (2013-06-07), pages 67-73, XP028727943, ISSN: 0167-9317, DOI: 10.1016/J.MEE.2013.05.016
- KRYSTIAN L. WLODARCZYK ET AL: "Laser microsculpting for the generation of robust diffractive security markings on the surface of metals", JOURNAL OF MATERIALS PROCESSING TECHNOLOGY, vol. 222, 10 March 2015 (2015-03-10), pages 206-218, XP055511258, NL ISSN: 0924-0136, DOI: 10.1016/j.jmatprotec.2015.03.001

## Description

### TECHNICAL FIELD

The present invention relates to methods for producing a metal stamp for embossing a nano- and/or microstructure on a metal device, to methods of generating an optical diffractive element in the form of a submicron grating on a metal device using such a metal stamp, as well as to devices comprising at least one nano- and/or microstructure which is directly embossed in an exposed metal surface of a load bearing part using such a metal stamp.

### PRIOR ART

Many established articles of commerce are being copied by copycats as well as by newly founded producers having obtained the characteristics by reengineering the products. This development is unfavorable for the users, since reengineered products may not meet the exact specifications of the engineered design, often do not meet the quality standards and regularly failures are reported. On the other hand, the market for copycats is growing fast due to lower prices. Lower prices are mainly determined by a weaker quality system and, for example in the medical field for the lack of clinical studies, or in the automotive field for the lack of approvals by other authorities. The influence of CADCAM as well as 3D printing solutions is likely to speed up this development quickly.

Responsible users ask for original parts. However, for example in the medical field, it is difficult for a surgeon to find out if an original or a copied prosthetic part was used, since this decision which product to use is made at the orthopaedic technicians site and is not visible on the part. It is assumed that the amount of all prosthetic parts purchased through copycats will shift to 50% within the next 5 years in Europe and US. This is equivalent to 40% of the complete prosthetic sales. Furthermore, it is assumed that 50% of the surgeons would preferably use original parts, if they could distinguish between. Therefore, a 20% loss of sales of prosthetic products is expected, if no identification of the original manufacturer will be applied. Similar figures are assumed in other fields in industry.

A very important further topic is guaranty claims for damaged parts. Guaranty claims have to be investigated carefully, to assure original parts have been used. One has observed an increasing use of guaranty claims which were based on cheaper copied pieces over the last years.

In US2010109194A1 systems and methods for forming a first replica from an imprint master and a second replica from the first replica are described.

US2005187339A1 is directed to a material for use in imprint lithography that features a composition having a viscosity associated therewith and including a surfactant, a polymerizable component, and an initiator responsive to a stimuli to vary the viscosity in response thereto, with the composition, in a liquid state, having the viscosity being lower than about 100 centipoises, a vapor pressure of less than about 20 Torr, and in a solid cured state a tensile modulus of greater than about 100 MPa, a break stress of greater than about 3 MPa and an elongation at break of greater than about 2%.

US2017100204A1 relates to a method of marking a surgical instrument with a symbol formed in or on a smooth surface and comprises forming a symbol in or on a smooth surface of the surgical instrument; and forming a plurality of angled surfaces over at least part of the area of the symbol. The angled surfaces define a plurality of parallel ridges and grooves in the symbol. The steps of forming the symbol and forming the plurality of angled surfaces take place substantially simultaneously in a single step.

US2012297856 discloses a method and a process for obtaining a metal stamp from an intermediate polymer stamp comprising the steps of providing a first print layer on top of a first polymer layer, imprinting structures to obtain an intermediate stamp. A conductive layer is provided on top of the structures to obtain a seed layer if the imprinted polymer is a nonconductive, plating metal on top of the intermediate polymer stamp to obtain a metal stamp then separating the intermediate stamp from the metal stamp. This invention demonstrates stamp replication in high throughput and at low cost.

US2010301004 discloses how an electrodeposited Nickel stamp is replicated from a conductive master, e.g. Titanium metallic master instead of a photoresist patterned master. The conductive layer is served as a working electrode in the subsequent electrodepositing of the Nickel metal. After the electroplating, Nickel stamps are obtained by peeling the Nickel metal sheet off the conductive layer of the metallic master. Low adhesion between metallic master and Nickel stamp make it possible to delaminate the Nickel stamp without any defects.

US2009325107 discloses methods of forming a lens master wafer having aspheric lens shapes. In one embodiment, a substrate is coated with a polymer material. Isolated sections are formed in the polymer material. The isolated sections are reflowed. The reflowed sections are formed into aspheric lens shapes using a lens stamp.

US5728324 proposes a method of fabricating a diffractive optical element which includes the steps of: etching a negative of a desired multi-level diffraction pattern onto a molding surface of a quartz master element using photolithography, assembling the master element as a portion of a mold, and injecting a plastic molding composition into the mold and against the molding surface of the master element to injection mold a diffractive optical element, whereby the optical element has the desired diffraction pattern on its surface. The diffraction pattern is preferably formed on the quartz master using VLSI photolithography.

The article entitled 'Laser microsculpting for the generation of robust diffractive security markings on the surface of metals' by Krystian L. Wlodarczyk et al., published in the Journal of Materials Processing Technology 222 (2015), pages 206-218, describes a laser-based process for the direct writing of reflective phase holograms on the surface of metals for the purpose of security marking.

The article entitled 'Increased efficiency of direct nanoimprinting on planar and curved bulk titanium through surface modification' by Andrey I. M. Greer et al., published in Microelectronic Engineering 112 (2013), pages 67-73, describes the direct transfer of nanopatterns into titanium. The nanofeatures are imprinted at room temperature using diamond stamps in a single step. In order to significantly reduce the required imprint force for pattern transfer, the imprint properties of the titanium surface can be altered by anodisation, in particular for curved titanium surfaces where a reduced imprint force is preferable to avoid sample deformation and damage.

### SUMMARY OF THE INVENTION

Many attempts have been made to avoid copying or to track and to trace metal parts. These attempts include packaging with elaborated security features, but also laser marking of the devices themselves or attaching security elements to the devices. The problem with the former is that after the device has been unpacked there is no possibility to check the identity and/or origin of the device anymore. The problem with the latter is that laser markings are conventional art and can be as easily reproduced as the device itself. Attaching security elements to metal devices is a problem since on the one hand for many applications these security elements will have to be removed before use of the metal part, and attaching them to the metal part requires adhesives which for example in the medical field are not tolerated. Furthermore, attaching the security elements to the metal parts also allows to remove them fraudulently and to re-use or replicate the corresponding features for deceptive use.

The invention solves this problem by providing a method for making a metal stamp tool for embossing an optical security element on any kind of metal device, a metal stamp tool made by this method,

as well as the method of using such a metal stamp tool for applying the corresponding optical security feature directly onto and into the desired metal device. At the end the device comprises at least one optical security feature comprising diffractive elements made of nano- and/or microstructures, with one or more gratings which are directly embossed in an exposed metal surface in the form of a security and/or identification element.

Micro structuring is defined as the creation of surface structures which are submicronic in dimensions (i.e. periodicity smaller than 1 µm, typically in the range of 200-800 nm), in the micron-scale or of a few microns (typically at most 5 µm or at most 2 µm) in dimensions. For example for periodic nano- and/or microstructures such as gratings, the ridge/groove sizes can be submicronic (i.e. smaller than 1 µm, typically in the range of 200-800 nm) or up to a few microns (typically at most 10 µm or at most 5 µm), the depth of the microstructure in the submicron domain while the microstructure periodicity can be larger than one micron, for example less than or 2 µm.

The nano- and/or microstructures can comprise or consist of non-periodic nano- and/or microstructures such as Fourier or Fresnel Diffractive Optical Element (DOE), random microstructures, Optically Variable Devices (OVDs), Diffractive Optical Variable Image Devices (DOVIDs), micro-images, micro-structures encoding an image, code or symbol based on a Moiré encoding, diffusive and scattering optical microstructures, zero-order color-generating optical microstructures and a combination thereof.

More specifically, the present invention according to a first aspect relates to the method of claim 1, i.e. to a method for producing a metal stamp for embossing a nano- and/or microstructure, preferably an optical security feature comprising a diffractive element with a grating, on a metal device.

The method comprises at least the following steps in given order for forming a 3D topologically structured embossing area on at least a surface portion of the metal stamp:
a) providing a master tool having a master 3D topologically structured surface representing said optical diffractive element, and replicating said master 3D topologically structured surface in the surface of a soft stamp to form a soft stamp 3D topologically structured surface;
b) forming an imprint on the soft stamp 3D topologically structured surface using a polymerizable and/or cross-linkable organic imprint material to form an imprint 3D topologically structured surface on one face of the imprint, before, while or after contacting an opposite side of the imprint with said surface portion of the soft stamp, and removing said soft stamp exposing said imprint 3D topologically structured surface;
c) etch-opening said imprint 3D topologically structured surface to expose back to air only most recessed portions of the imprint 3D topologically structured surface using a first set of etching conditions;
d) using a second set of etching conditions, different from the first ones, etching the metal surface of the metal stamp to form said 3D topologically structured embossing area, wherein the metal etching in this step is carried out using reactive ion beam etching (RIBE) or ion beam milling (IBM).

According to a first preferred embodiment, the method is characterized in that prior to step a) and/or b) the surface portion of the metal stamp for the embossing area is polished, preferably using mechanical, chemical or combined mechanical and chemical polishing techniques, preferably until a surface roughness Ra (as defined according to ISO 4287:1997) of at most 0.8 µm, preferably of at most 0.5 µm or at most 0.3 µm or at most 0.23 µm is established at least in the surface portion of the metal stamp for the embossing area.

The master tool is typically made from a photoresist material, glass, a nickel shim, a fused silica master, a sol-gel replica. Such a master tool can for example be produced using a method and materials as described in the following literature: Optical Document Security (R.L. Renesse, Optical Document Security, Third Edition, 3rd edition, Artech House, Boston, Mass., 2004).

The material of the soft stamp, which is preferably elastomeric, can be selected from the group consisting of: silicon-based elastomers such as PDMS, urethane-based elastomer, polyurethane, polypropylene-based organic material, polyacrylates such as polymethyl-methacrylate (PMMA) or polycarbonate (PC), Polyester (PET), Polyamide (PA), a fluoropolymer such as ETFE or PTFE, polyimide (PI) and any combination thereof.

The soft stamp can as well be made of a 2 layers composite such as a foil and an elastomeric material. The elastomeric material can be one of the above listed and the foil be flexible and can be selected among polyamide, polyethylene terephthalate, polycarbonate polyamide.

Within step a) replication of the master 3D topologically structured surface can be carried out using hot or cold embossing, UV embossing, UV casting, heat casting or heat and UV casting or a combination thereof.

Before step b) the soft stamp material can be hardened and/or cross-linked and/or polymerized.

The polymerizable and/or cross-linkable organic imprint material is preferably an acrylate based material (including methacrylate materials), a polyester-based material, an epoxy-based material or an urethane-based material

The polymerizable and/or cross-linkable organic imprint material can also be a two component material, possible 2 component systems suitable for the present use are epoxy-based resins.

In step b) before or after removing said soft stamp the material of the imprint is preferably cross-linked and/or polymerized for example using irradiation and/or heat, preferably UV irradiation. Preferably, the imprint material will be structured with a 3D topologically structured surface being close to the complementary 3D topologically structured surface of the soft stamp, its negative copy. So a good fidelity of replication is preferably targeted.

In step b) the polymerizable and/or cross-linkable organic imprint material can be deposited on the soft stamp using a coating technique, preferably slot coating, cast coating, spin coating, spray coating or a combination thereof.

Application of the imprint on the soft stamp may involve pressing imprint material located between the soft stamp and the metal stamp, preferably using a tampon, preferably a deformable elastomeric tampon.

On the opposite or in complement, the imprint can be applied on the metal part area that will be structured with one or a combination of the above listed coating techniques.

To avoid problems when removing the soft stamp from the imprint material to free the corresponding 3D topologically structured surface comprising one or more gratings of the surface of the imprint material, anti-sticking material can be applied to the soft stamp 3D topologically structured surface before contacting with the polymerizable and/or cross-linkable organic imprint material.

Etch opening within step c) is carried out using a dry etching technique including reactive ion etching (RIE) and reaction ion beam etching (RIBE), wherein preferably the plasma composition is tuned to provide a good etching anisotropy of the imprint material.

The metal etching in step d) is carried out using a dry etching technique including reactive ion beam etching (RIBE), also called ion beam milling (IBM), wherein preferably the following conditions are used: the dry etching is stopped before all the 3D structured imprint material is removed/etched away; the dry etching technique is applied close to the normal of the area of the metal part to be structured for marking, close to the normal to the average orientation of the metal part marking area for a non-planar metal part marking area.

After step d) residual imprint material if present can be cleaned from the surface.

As pointed out above, the present invention also relates to a metal stamp/metal stamp tool being produced using the above mentioned method. Correspondingly the present invention describes a metal stamp with a 3D topologically structured embossing area made using a method as given above, wherein preferably at least in the region of the 3D topologically structured embossing area (3) the metal stamp is made from steel, preferably hardened steel, more preferably selected from the following steels: 1.2083, 1.2363, UM20 HIP, UM30 HIP, K110/1.2379, K340, K470, K890, Stavax ESR or ESU, Rigor 1.2363, Böhler K305, EN 1.2344, SKD61 1.2344, EN 1.2343, EN 1.2083, EN 1.2162, EN 1.2516, or RAMAX.

The present invention also relates to a method of generating a nano- and/or microstructure, e.g. security feature comprising an optical diffractive element with a grating on a metal device, wherein a metal stamp as detailed above carrying a topologically structured surface being essentially the negative of the nano- and/or microstructure, e.g. the optical diffractive element with a grating to be generated on the device is embossed on an exposed metal surface of the device under plastic deformation conditions such that the topology of the topologically structured surface is imaged on the metal surface of the device, wherein preferably the metal stamp has a grating depth in the range of 80-500 nm, more preferably in the range 200-400 nm, and even more preferably in the range of 230-300 nm.

The method is preferably characterized in that the metal stamp at least in the region of the topologically structured surface for embossing, consists of material of a higher hardness than the material of the device in the exposed region to be embossed, wherein preferably the metal stamp is essentially based on hardened steel, preferably selected from the following steels: 1.2083, 1.2363, UM20 HIP, UM30 HIP, K110/1.2379, K340, K470, K890, Stavax ESR or ESU, Rigor 1.2363, Böhler K305, EN 1.2344, SKD61 1.2344, EN 1.2343, EN 1.2083, EN 1.2162, EN 1.2516, or RAMAX, or hardened steel with a hard coating.

Hard coating can be made of tungsten carbide, Si3N4 or ZrO2, cemented carbide such as tungsten carbide (WC), titanium carbide (TiC), or tantalum carbide (TaC) as the aggregate. Mentions of "carbide" or "tungsten carbide" in industrial contexts usually refer to these cemented composites. Such a hard coating can also be made of Cr Nitrides CrN or CrAlN, TiN, Diamond Like Carbon (DLC) or other suitable materials.

The 3D topologically structured surface with one or more nano- and/or microstructures, e.g. gratings, can be embossed using the metal stamp using an embossing pressure in the range of 0.1-5 kN/mm², preferably in the range of 0.2 - 2 or 0.5-1 kN/mm² .

The one or more gratings is for example embossed at a temperature of at most 150°C, preferably at most 100°C, preferably in the range of 10-40°C.

The present invention also relates to a device essentially consisting of or comprising a structural load bearing part consisting of metal, with the exception of a medical prosthesis, medical osteosynthesis device or hearing aids (including housings thereof), wherein the device comprises at least one nano- and/or microstructure in the form of an optical diffractive element, e.g. a security feature comprising an optical diffractive element with a grating, which is directly embossed in an exposed metal surface of the load bearing part in the form of a security and/or identification element, using a metal stamp made as detailed above or a metal stamp as given above.

The metal of such a device to be protected can be selected from steel, preferably stainless steel, or titanium or a titanium alloy with at least one of zinc, niobium, tantalum, vanadium, aluminium or aluminum or an aluminum alloy with for example scandium.

Preferably the most protruding elevations of the nano- and/or microstructure, preferably the grating, are at the level of the surrounding surface of the structural load bearing part and with respect to the surrounding surface, or are recessed with respect to the surrounding surface by less than 40 microns, preferably by less than 20 microns. The absence of a recess can be particularly advantageous in many applications. It is difficult or impossible to achieve with other methods, as for example by laminating/gluing a structured nickel shim on a metal tool to be used as a composite metal stamp.

In such a device but also in the corresponding metal stamp for making the embossing in the device, the period of the one or more grating is in the range of 0.3-3 µm or in the range of 0.5-2 µm, preferably in the range of 1.1.9 µm or 1.7-1.9 µm.

The depth of the one or more nano- and/or microstructures, e.g. the gratings in the metal stamp and/or the corresponding mental device is preferably in the range of 80-500nm, more preferably 200-400 nm, even more preferably in the range of 230-300 nm.

The 3D topologically structured surface comprising one or more nano- and/or microstructure or grating is for example embossed on a ground exposed metal part of the metal device.

The one or more nano- and/or microstructure (grating) can be embossed on an exposed metal part of the device having a surface roughness Ra (as defined according to ISO 4287:1997) of at most 0.8 µm, preferably of at most 0.5 µm or at most 0.3 µm or at most 0.23 µm, preferably in the range of 0.20-0.25 µm.

Typically, the one or more nano- and/or microstructure (gratings) is embossed using an embossing pressure in the range of 0.1-5 kN/mm², preferably in the range of 0.1-2 kN/mm². The grating can be embossed at a temperature of at most 150°C, preferably at most 100°C, preferably in the range of 10-40°C. The one or more nano- and/or microstructures can be provided in the form of a patch with a surface area of at most 5 mm², preferably in the range of 2-4.5 mm².

The one or more nano- and/or microstructures can e.g. be provided such that the tips of the grating are essentially flush with the surface plane defined by the surrounding metal surface. The security feature comprising an optical diffractive element may generate the image of a picture and/or letters and/or numbers and/or pictograms.

The metal device to be embossed with the metal stamp can be one of the following devices: part of or a watch, the security feature being provided in particular for the track and trace or anticounterfeiting in particular of the titanium or titanium alloy parts,
part of or a surgical tool, the security feature being provided in particular for the track and trace or anticounterfeiting,
part of or a medical system aid that can be implanted in human body with the exception of a medical prosthesis, medical osteosynthesis device or hearing aids, the security feature being provided for the track and trace or anticounterfeiting of in particular of the titanium or titanium alloy parts,
part of or an entire automotive, aeronautics, military, power plant, consumer computer device, the security feature being provided in particular for the track and trace or anticounterfeiting of the in particular titanium or titanium alloy parts or for decorative purposes.

Furthermore, the present invention relates to the use of a method as detailed above for making a metal device identifiable and/or for providing it with a security element and/or marking.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

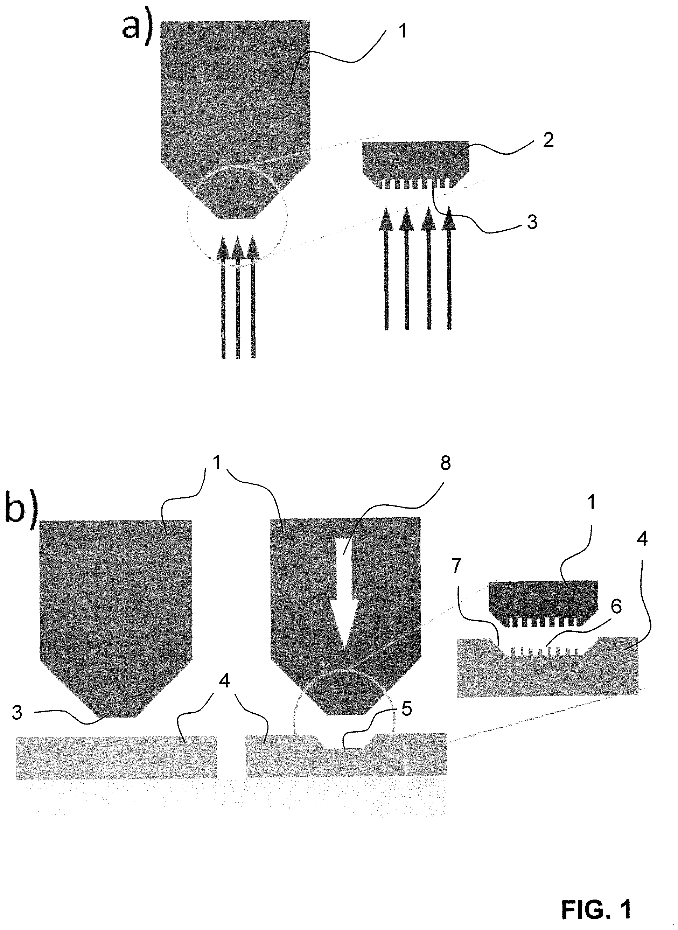

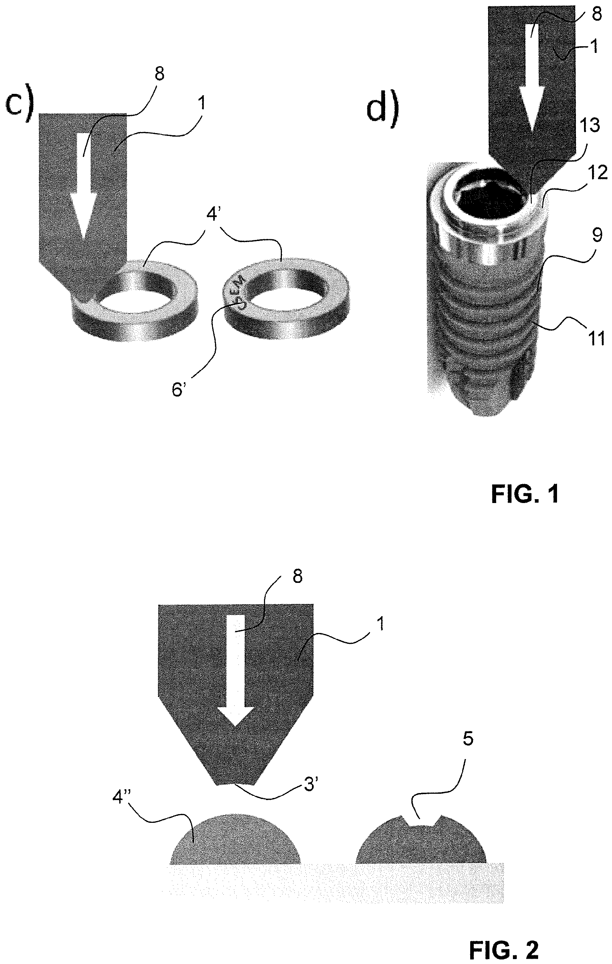

- Fig. 1: shows in a) a metal stamp for use in the context of the present invention as well as in a magnified representation to the right the corresponding topologically structured surface region for embossing, in b) on the left side the metal stamp and the element to be embossed before the step of embossing, in the middle the metal stamp and the element after embossing, and on the right side a magnified representation of the grating on the metal stamp and the embossing, in c) on the left side the metal stamp and the element in the form of a ring to be embossed before the step of embossing, on the right side the embossed ring, and in d) the embossing of a dental implant;
- Fig. 2: shows the situation of embossing a curved surface, wherein on the left side the situation before embossing, and on the right side the situation after embossing is schematically illustrated;
- Fig. 3: shows on the left side the embossing of a conical portion of the coronal collar of an implant and on the right side the embossing of a conical portion on an abutment;
- Fig. 4: shows in a) a laser scanning digital microscope image of the topologically structured surface on the metal stamp for an embodiment having a period of 1.8 µm, and in b) the properties along line 19 in a);
- Fig. 5: shows in a) a laser scanning digital microscope image of the resulting embossed grating on the object and in b) the properties along line 19 in a);
- Fig. 6: shows in a) a cut in a direction essentially perpendicular to the grating direction through an embossing generated in an abutment, in b) an image of an abutment with an optical diffractive element, in c) a REM image of the embossed grating and in d) the embossing region on the abutment;
- Fig. 7: shows a nanoimprinted microstructure on a flat steel stamp surface;
- Fig. 8: shows an opened nanoimprint material and open steel surface under AFM;
- Fig. 9: shows a simple diffractive transferred into hardened steel as seen under AFM;
- Fig. 10: shows a schematic representation of the metal stamp making process in schematic cut views showing the grating schematically as a zigzag pattern and the embossing process, wherein in a) the making of the soft stamp based on the master is shown, in b) the generation of the imprint based on the soft stamp is shown, in c) the attachment of the imprint on the metal stamp portion is shown, in d) the etch opened imprint on the metal stamp, in e) the front metal stamp portion after the metal etching and in f) the starting position for the embossing on the device to be embossed.

### DESCRIPTION OF PREFERRED EMBODIMENTS

The objectives of this invention is a microstructuring transfer/embossing process into for example a medical device, in particular into a titanium implant material of structures like holograms and Optical Diffractive Elements (DOE). This, to add optical security features consisting of nano - and/or microstructures, like sophisticated holograms, covert laser readable images, 2D/3D QR codes, logos, article or lot numbers or micro-text, directly into the titanium implant material such to create visual and appealing 1st level control security features on the one hand side, and/or to provide unique identifying (hidden) 2nd level control security features for trademark protection, e.g. to identify new or explanted fake implants and defeat product counterfeiting, on the other hand.

In the security world one usually defines 3 levels of security features:
First level are features visible by naked eyes and do not need any external set-up, typically holograms are 1st order security devices.

The second level features will need a simple external set-up, like a UV lamp, a laser pointer etc. easy to find on the market, UV inks and DOE's are often 2nd level security devices.

And the 3rd level are security features that can only be identified in the laboratory, like the real composition of a material, the measurement of traces of specific chemical compounds or elements.

Here, focus is put on first and second level security features.

Nano- and/or microstructure surface labelling is tissue-compatible because the process is only based on a pure physical structuring of the surface of the implant, and no chemicals, acids, paints, pigments, coatings or solvents need to be implemented.

Furthermore, the proposed markings are abrasion-resistant and that they can be disinfected and sterilized.

A new way of hologram tooling is used. As already mentioned this process permits to transfer complex holograms directly into hard steel surfaces. By illuminating a certain area on the micron-structured steel surface with a laser pointer, a logo and/or a data code is projected on a screen.

The steel nano- and/or microstructuring technology can be used to make high resistant stamping tools, capable to stamp the holograms into the titanium alloys those implants are made of.

This can be accomplished by using a stamping/embossing process after the production of the metal stamp.

Nano- and/or microstructuring is defined as the creation of surface structures which are submicronic in dimensions, in the micron-scale or of a few microns in dimensions. For example for periodic microstructures such as gratings, the ridge/groove sizes can be submicronic or up to a few microns, the depth of the microstructure in the submicron domain while the microstructure periodicity can be larger than one micron, for example 2 microns.

The making of the metal stamp 1 having a tip portion 2 with a topologically structured grating structure which is complementary to what is to be generated on the device is very schematically illustrated in figure 1 a).

Such a metal stamp can be generated using a technique as follows, using a new approach by directly transferring micro and nano-structures into a typically hardened steel material for the metal stamp. This increases drastically the stamp lifetime compared to conventional stamp making techniques. The structuration of 2D curved metal stamp surfaces with small radius of curvature is as well demonstrated. This technique and the resultant stamps allow the hot and cold embossing of various materials in very large volumes.

The structuration of steel or other metallic stamps relies on several process steps, some of which are optional depending of the tool and result to be achieved:
1. In a first step, the surface of the metal stamp, with which micro- and nanostructures should be embossed on the final part, should to be polished. Most steel grades have random rough surfaces in the scale to a few to several microns, in order to create a matt or dull finish on the polymer surfaces. To transfer successfully smaller structures with a high coverage, this topography needs to be planarized using polishing techniques. Various polishing technique, purely mechanical, purely chemical or combined mechanical and chemical etching can be used. The roughness target after this polishing step should be lower than the micro- or nanostructures to be transferred, in order get high surface coverage and optimal optical quality of the diffractive structures. Typically the surface roughness, should be lower than (as defined according to ISO 4287:1997) 0.8 µm, preferably lower than 0.5 µm or lower than 0.3 µm or lower than 0.23 µm, preferably lower than 0.05 µm and more preferably as low as or lower than 0.020 µm. When possible and depending on the mold geometry, a so-called mirror finish polishing is preferable. Ultimately the grain size of the steel will limit the achievable planarization quality. To reach very low roughness levels, as may be interesting for the transfer of nanostructures, the use of cold-worked steels which have not be annealed is preferable. Useful for the present purpose of making metal stamps are steel types as follows: 1.2083 ; 1.2363; UM20 HIP; UM30 HIP; K110/1.2379; K340; K470; K890, Stavax ESR or ESU, Rigor 1.2363, Böhler K305, EN 1.2344, SKD61 1.2344, EN 1.2343, EN 1.2083, EN 1.2162, EN 1.2516, or RAMAX.
2. As a second step, a master tool containing the diffractive nano- and/or microstructures, whether simple grating or complex surface holograms, is replicated in a soft stamp material.

Preferably the soft stamp material is a soft material allowing the soft stamp to be flexible. The master tool can be made of a photoresist material, a glass, a nickel shim, a fused silica master, a sol-gel replica or any other material depending of the origination, structure modification and structure assembly processes. A method how to produce such a master tool as well as possible materials for use is e.g. disclosed in Optical Document Security (R.L. Renesse, Optical Document Security, Third Edition, 3rd edition, Artech House, Boston, Mass., 2004). The soft stamp material is made of a flexible material, usually elastomeric, which is either hot embossed, UV embossed, UV casted, heat casted or heat and UV casted from the master tool.

Possible specific materials for the soft stamp are as follows: silicon-based elastomers such as PDMS, urethane-based elastomer, polyurethane, polypropylene-based organic material, polyacrylates such as polymethyl-methacrylate (PMMA) or polycarbonate (PC), Polyester (PET), Polyamide (PA), a fluoropolymer such as ETFE or PTFE, polyimide (PI) and any combination thereof.

If needed the flexible and usually elastomeric material can be casted or laminated on a flexible foil that will support it and limit its lateral deformation. Especially during the imprinting step, pressure can lead to stretching of the soft stamp material.

3. The third step consists in imprinting the structure transferred from the master tool through the soft stamp to the actual polished metal stamp surface. The imprint material is usually an acrylate based, preferably cross-linkable organic material. Possible specific materials for the imprint material are as follows: an acrylate based material (including methacrylate materials), a polyester-based material, an epoxy-based material or an urethane-based material, or mixtures thereof.

The cross-linking of the imprint can be effected by UV exposure (UV induced cross-linking), a heating step (heat-induce cross-linking), UV and heat combined or using two-component cross-linkable materials.

The imprint material is deposited either on the soft-stamp, for example using spin-coating or on the final metal stamp surface, for example using spray-coating.

The final metal stamp surface is put it contact with the soft-stamp so that the imprint material located in between is pressed between the two materials. The pressure can be applied using a soft and deformable elastomeric tampon. The tampon geometry is usually adapted to the final metal stamp 3D shape to apply gradually a pressure for the soft-stamp center to its outer edges. After the cross-lining, the soft-stamp and metal stamp are demolded. To prevent damaging the imprint material or to delaminate the imprint material from the metal stamp surface, an anti-sticking agent can be applied on the soft-stamp before it comes into contact with the imprint material.

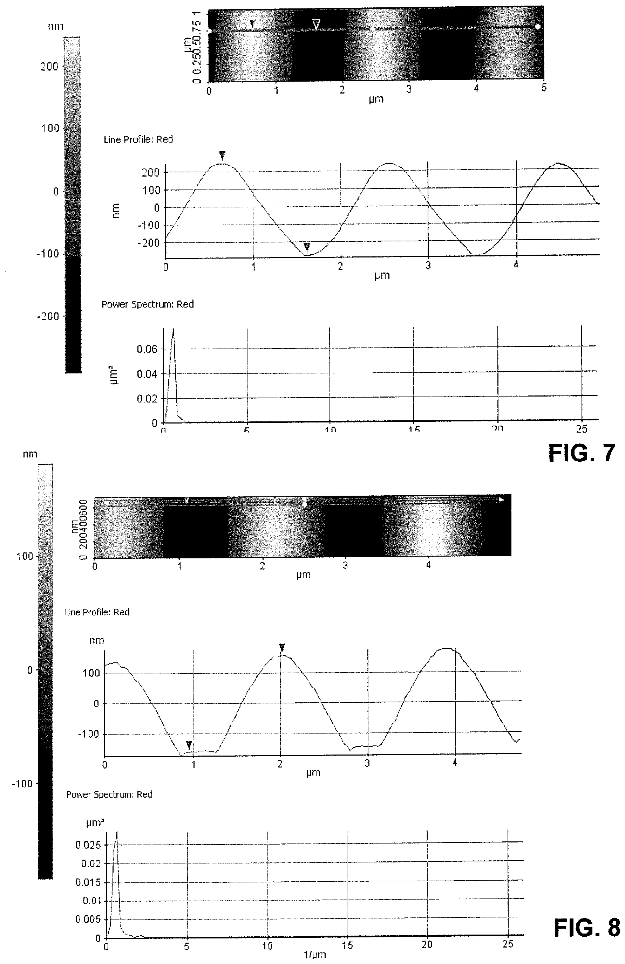

4. The imprint organic material transferred to the polished mold surface then needs to be etched. An AFM topography image of such a micro-structure can be seen in figure 7. The imprint material contains a continuous imprint material layer below its patterned upper surface.

This residual layer is etch opened, usually using a dry technique method such a Reaction Ion Etching (RIE), preferably an oxygen based RIE. Suitable etching conditions are as follows: oxygen reactive ion beam etching of 4 minutes.

This allows exposing back to air a portion of the steel polished surface, as can be seen in figure 8 under AFM.

5. The steel tool is now etched using Reactive Ion Beam Etching (RIBE) also called Ion Beam Milling (IBM), typically using ionized argon gas.

Suitable etching conditions are as follows: Veeco RIBE plasma chamber with a duration of 25 minutes.

Such dry etchings have relatively low selectivity between various metals. This allows the metal stamp tool, possibly made of hardened steel, to be etched in its bulk with relatively good depth as structure aspect ratio above 1 can be realized.

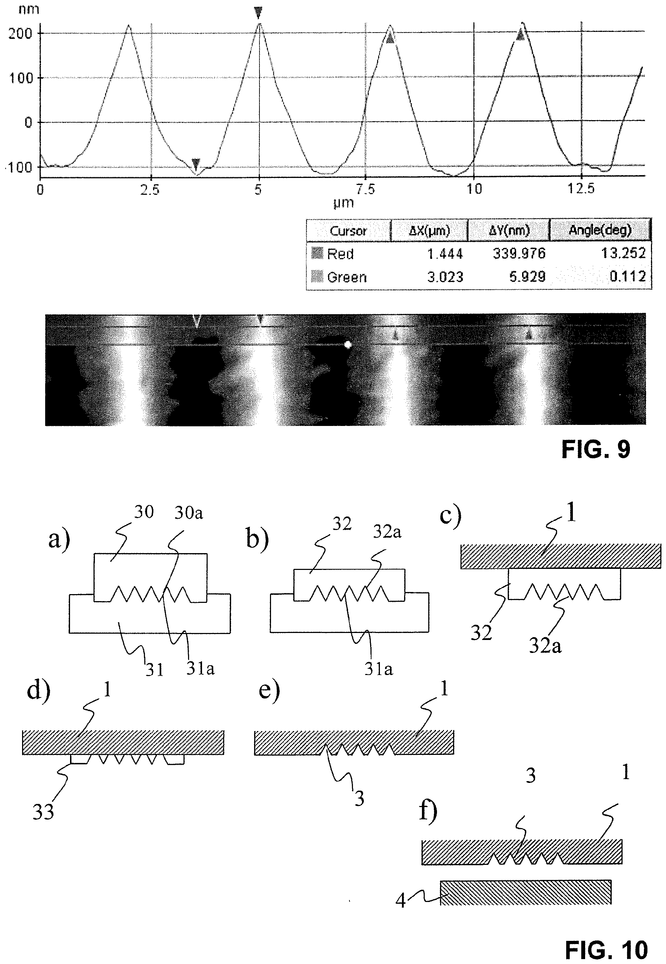

At the end of this transfer, the imprint material and etching residues are either fully etched away or the residues left can be easily cleaned so that the metal stamp tool is back to its original composition. Figure 9 shows a simple diffractive transferred into hardened steel as seen under AFM.

The steps are schematically illustrated in figure 10.

Figure 10 a) shows the first step of the generation of the soft stamp. The master 30 is provided and its grating portion 30a is for example hot embossed into the soft stamp 31, so that in the corresponding surface of the soft stamp a replica of the grating portion 30a is generated forming the soft stamp grating 31a.

In the next step this soft stamp is used for making the imprint 32, this is illustrated in figure 10 b). To do so, for example in a casting process, imprint material is cast at least on the soft stamp grating portion 31a, so that the corresponding grating is again replicated forming the imprint grating 32a.

In the next step the result of which is illustrated in figure 10 c), the imprint is then transferred to the surface portion of the metal stamp 1 which shall be provided with the corresponding grating. It is also possible to directly form the imprint between the soft stamp 31 and the metal stamp 1, for example by providing the imprint material on the surface of the metal stamp 1 as a layer and then applying the soft stamp 32 to that coated surface portion.

In this phase the imprint 32 still is fully covering the corresponding area, the metallic surface of the metal stamp 1 not being exposed anywhere.

In the next step the imprint material is etch opened leading to the situation as illustrated in figure 10 d). The etch opened imprint 3D topologically structured surface 33 exposes now the corresponding metal portions as regular pattern.

In a following step, the result of which is illustrated in figure 10 e), metal etching takes place such that the open portions of the etch opened imprint 33 are etched a way leading to a corresponding grating in the surface of the metal stamp 1.

Now the metal stamp 1 or rather the corresponding topologically structured portion 3 thereof, can be used to emboss the corresponding optically active pattern in the corresponding device 4.

### A specific Example of a 1.2083 steel metal stamp production method is described for exemplary purpose:

In a first step, the surface of a metal stamp made of steel 1.2083, with which micro- and nanostructures should be embossed, is polished to be mirror-like. Most steel grades have random rough surfaces in the scale to a few to several microns, in order to create a matt or dull finish on the polymer surfaces. To transfer successfully smaller structures with a high coverage, this topography needs to be planarized using polishing techniques.

As a second step, a master tool containing the diffractive nano- and/or microstructures, whether simple grating or complex surface holograms is made of a nickel plate grown galvanically from a previous master, so-called a nickel shim. The nickel shim is coated with 10mL of a fluorinated and no-fluorinated acrylated/methacrylated mixture UV-Opti-Clad made by Ovation Polymers. The structured nickel shim coated with the mixture is pressed against a planar fused-silica wafer and flashed with 10W/cm² of 365nm UV light. The cross-linked UV-Opti-Clad soft stamp is peel-off from the structured nickel shim and fused-silica wafer.

The structured surface of the soft stamp is activated with a 5 minutes thinned-air plasma in a Harrick PDC-32G plasma cleaner oven. A thermal imprint material is spin-coated on the activated structured surface at 2000 rotation per minute with a mr-I T85-5 imprint material from Micro-Resist Technology GmbH.

The third step consists in imprinting the structure transferred from the master tool through the soft stamp to the actual polished metal stamp surface. In order to press the imprint material on the metal surface, the backside of the soft stamp is pressed on with an elastomeric tampon with 50N/cm² using a pressing steel plate. The metal stamp is coated with, the imprint material, the soft stamp, the elastomeric tampon and the pressing steel plate is placed in an oven. The oven is heated up to 140°C for 2h.

The pressing steel plate, the elastomeric tampon and the soft stamp are removed during the cooldown, leaving the metal stamp surface coated with a thin imprint material layer structured with the opposite polarity of the soft stamp, having the same polarity as the nickel shim used.

The fourth step consists of an oxygen etching in a Veeco RIBE plasma chamber with the imprint material facing the plasma. The duration of the oxygen reactive ion beam etching is of 4 minutes to etch open the grooves of the structures to the metal stamp surface.

A second etching step is used to etch the micro- and nanostructures into the metal stamp using a Veeco RIBE plasma chamber with a duration of 25 minutes.

With the previously mentioned method, coated metal stamps can also be nano- and/or microstructured, for example by hard chrome electroplating. According to the method described above, a diffractive microstructure 3 is created in the surface.

If necessary, the metal stamp 1 or its surface 3 may be hardened after generating the microstructure by a subsequent heat treatment or ion implantation.

The actual embossing on the device to be made identifiable is illustrated in Figure 1 b). The metal stamp 1 is pressed onto the surface of the corresponding device 4 until an embossed region 5 is formed under plastic deformation conditions. In this case the result is a general indentation 7 in the region where the grating of the patch is generated. However it is also possible to emboss without having such an overall indentation. A grating 6, which essentially corresponds to the complementary topologically structured surface to the one in the metal stamp is generated on the surface of the device 4.

So in essence the proposed method consists in hammering the desired microstructure into the surface of the device to be securitized by an embossing method using a main die in the form of the metal stamp. This metal stamp can be nano- and/or microstructured with the ionic etching method described above, it may however also itself have been produced in an embossing process.

To be able to hammer a diffractive microstructure with a metal stamp into metal device, e.g. a metallic implant, the following prerequisites should be met:
1. The hardness of the metal stamp should be greater than that of the metal device at the position of the patch.
2. Young's modulus should be as high as possible for both in order to minimize the elastic deformation.
3. The applied stress should be higher than the yield point but lower than the ultimate tensile stress of the compression die. Furthermore, it should be lower than the yield point, if any, and the ultimate tensile stress of the main die.

To be able to nano- and/or microstructure a device based on stainless steel or titanium (alloys) as conventionally used in the field of processes of prosthesis and implants, a main die of hardened steel, for example, is advantageous and an embossing pressure of approximately 0.1-5 kN/mm² is required, preferably in the range 0.1-2 kN/mm². As an alternative to that, the main die may also be made of hardened steel with a coating of tungsten carbide, Si₃N₄ or ZrO₂, for example, which carries the microstructure. The latter embodiment is less expensive because only the coating must be made of the very hard and fracture-resistant material.

Figure 1 c) and d) show that the corresponding process can be used for different medical devices, and the corresponding optical patches can be applied at different places in these devices. In Figure 1 c) the device 4' is a medical distance holder ring.

In figure 1 d) the device is an implant 9. The dental implant 9 comprises an apical threading region 11 and a coronal collar region 10. Typically the apical threading region is provided with a rough surface (by chemical treatment and/or mechanical treatment) which is not suitable for the generation of a grating 6. On the other hand the collar region 10, and in particular axial circumferential surfaces such as the lower abutment surface 12 or the upper terminal surface 13 are suitable for embossing the corresponding optically variable grating patch.

As illustrated in figure 2, the embossing is not limited to flat surfaces such as illustrated in figure 1, the embossing process has the advantage of also being suitable for convex and/or concave surfaces. Essentially any kind of surface can be embossed, all that needs to be taken care of is that the general surface form on the tip 3' of the metal stamp 1 should be complementary to the general surface form of the section of the device 4" where the grating patches to be applied.

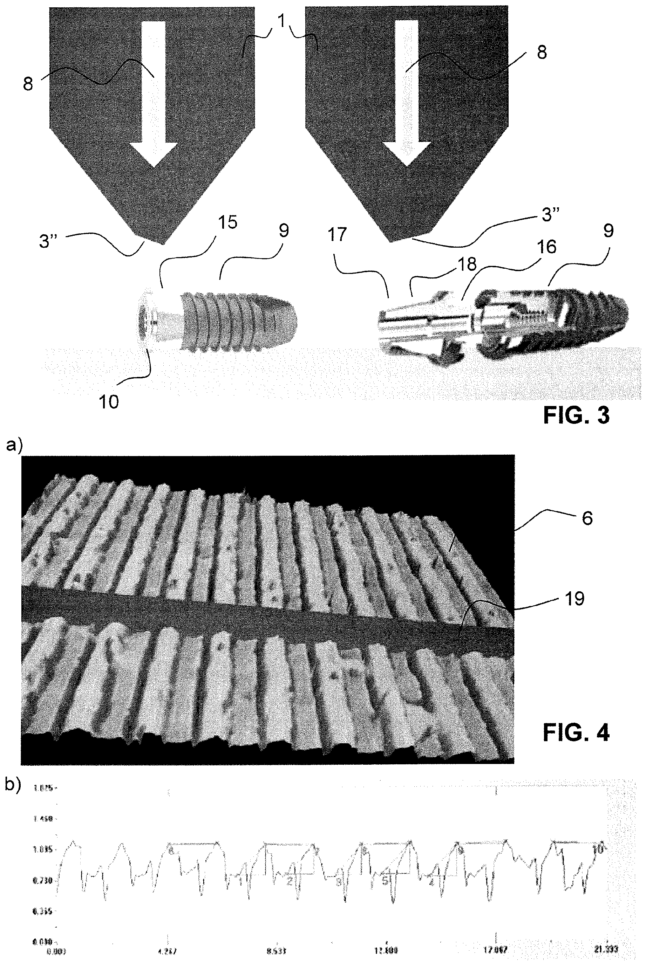

Other possibilities of locating a corresponding embossed grating 6 on implants are illustrated in figure 3. On the left side it is illustrated that an embossed grating 6 can be generated on the radial surface 15 of the dental implant which is either converging apically as illustrated in this figure, or also the opposite, if the corresponding surface is converging coronally. On the left side in figure 3 it is illustrated that the corresponding embossed grating 6 can be generated on an abutment 17, specifically on a frustoconical section 18 thereof. While not being illustrated in figure 3 on the right-hand side, it is also possible to generate corresponding patches in a lower apical region of the abutment 17, for example in one of the contact surfaces contacting the implant in use.

Figure 4 illustrates the surface topology on the metal stamp, using the methods as described above a nice grating can be generated if for example a grating period of 1.8 µm is used. The grating has a depth of approximately 360 nm. The grating can be generated over the full patch and it comprises only little lattice imperfections.

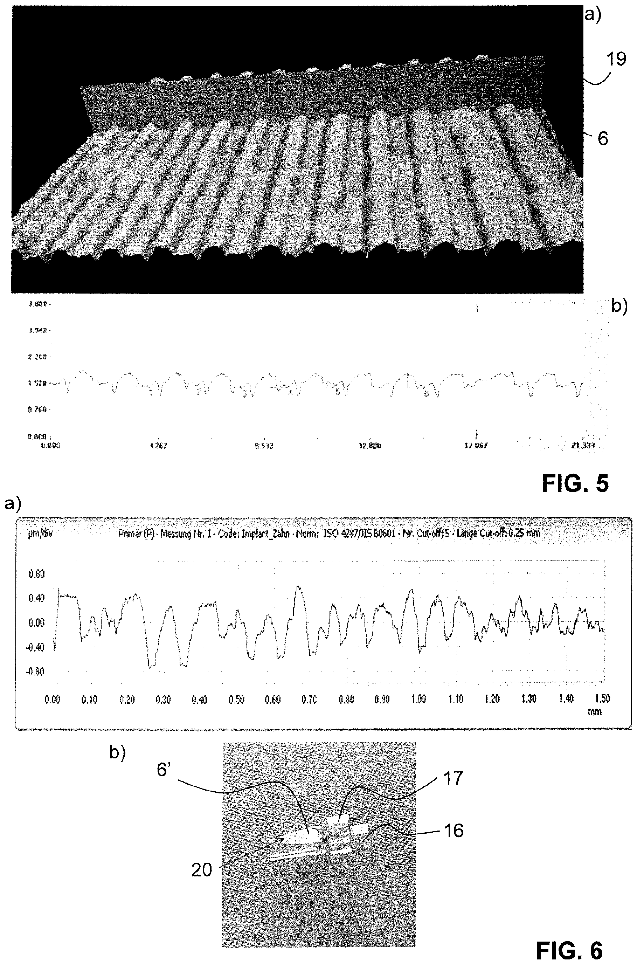

Figure 5 demonstrates that even after having been used repeatedly, the corresponding metal stamp maintains the essential properties of the topologically structured surface. After a series of embossing's in titanium material still the grating has a depth of approximately 360 nm, there is little deposition of titanium on the surface of the metal stamp.

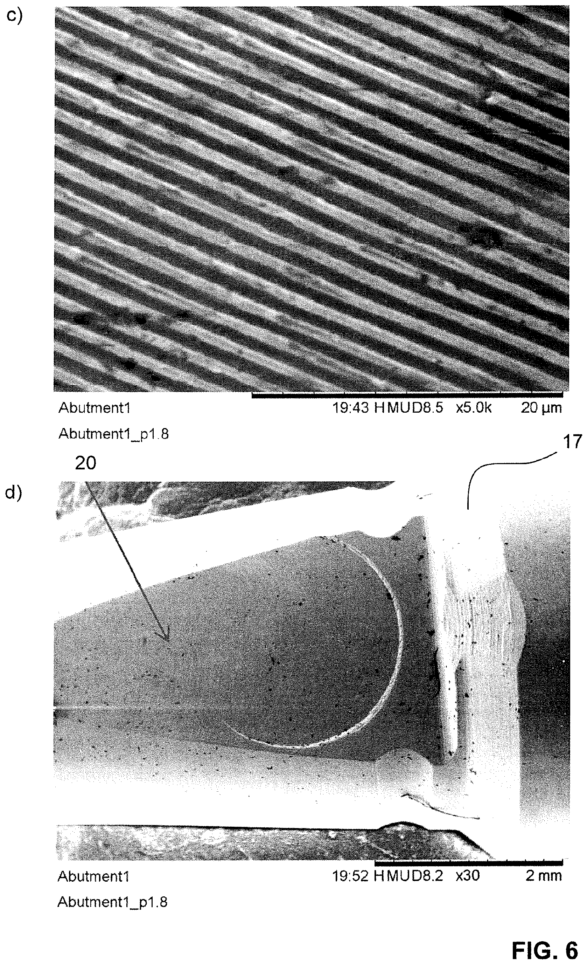

Figure 6 shows a dental abutment 17 in the coronally converging portion thereof there is provided a flattened region 20, and where in this flattened region the optical diffractive element with a grating 6' has been generated. As one can see from a) the corresponding grating has a depth in the range of 250 nm, the proper periodicity, and the structure was generated in an abutment having a roughness value Ra of approximately 0.22 µm. Oppressing force of 4.5 kN was applied at room temperature resulting in a grating as illustrated in c) and d).

### LIST OF REFERENCE SIGNS

| | | | |
|---|---|---|---|
| 1 | metal stamp | 12 | lower abutment surface on 10 |
| 2 | front portion of 1 | 13 | upper terminal surface on 10 |
| 3 | topologically structured front surface of 1 | 14 | interface (female) for attaching an implant |
| 3' | topologically structured | 15 | conical portion of 10 |
| | concave front surface of 1 | 16 | interface (male) for attaching the abutment to the implant |
| 3" | topologically structured inclined front surface of 1 | | |
| | | 17 | abutment |
| 4 | object to be provided with a grating | 18 | conical surface of the abutment |
| 4' | object in the form of a ring | 19 | measurement line |
| 4" | object with convex surface | 20 | flattened portion on 18 with optical diffractive element |
| 5 | embossed region in 4 | | |
| 6 | grating embossed in 4 | | |
| 6' | grating in the form of a diffractive optical element | 30 | master tool |
| | | 30a | master 3D topologically structured surface |
| 7 | general indentation | | |
| 8 | embossing force | 31 | soft stamp |
| 9 | dental implant | 31a | soft stamp 3D topologically structured surface |
| 10 | coronal collar region of 9 | | |
| 11 | apical threading region of 9 | 32 | imprint |
| 32a | imprint 3D topologically structured surface | | topologically structured surface |
| 33 | etch opened imprint 3D | | |

## Claims

1. Method for producing a metal stamp (1) for embossing a nano- and/or microstructure on a metal device (4), wherein the method comprises at least the following steps in given order for producing a 3D topologically structured embossing area (3) on at least a surface portion of the metal stamp (1):
a) providing a master tool (30) having a master 3D topologically structured surface (30a) representing said nano- and/or microstructure, and replicating said master 3D topologically structured surface (30a) in the surface of a soft stamp (31) to form a soft stamp 3D topologically structured surface (31a);
b) forming an imprint (32) on the soft stamp 3D topologically structured surface (31a) using a polymerizable and/or cross-linkable organic imprint material to form an imprint 3D topologically structured surface (32a) on one face of the imprint (32), before, while or after contacting an opposite side of the imprint (32) with said surface portion of the metal stamp (1), and removing said soft-stamp (31) exposing said imprint 3D topologically structured surface (32a);
c) etch-opening said imprint 3D topologically structured surface (32a) to expose back to air only most recessed portions of the imprint 3D topologically structured surface (32a) using a first set of etching conditions;
d) using a second set of etching conditions, different from the first set of etching conditions, etching the metal surface of the metal stamp (1) to form said 3D topologically structured embossing area (3), wherein the metal etching in this step is carried out using reactive ion beam etching (RIBE) or ion beam milling (IBM).

2. Method according to claim 1, wherein the nano- and/or microstructure is an optical diffractive element with a grating (6).

3. Method according to any of the preceding claims, wherein prior to step a) and/or b) the surface portion of the metal stamp for the embossing area (3) is polished, preferably using mechanical, chemical or combined mechanical and chemical polishing techniques, preferably until a surface roughness Ra, as defined according to ISO 4287:1997, of at most 0.8 µm, preferably of at most 0.5 µm or at most 0.3 µm or at most 0.23 µm is established at least in the surface portion of the metal stamp for the embossing area (3).

4. Method according to any of the preceding claims, wherein the master tool (30) is made from a photoresist material, glass, a nickel shim, a fused silica master, a sol-gel replica or a combination thereof.

5. Method according to any of the preceding claims, wherein the material of the soft stamp, which is preferably elastomeric, is a polymeric or oligomeric material selected from the group consisting of: silicon-based materials, preferably organosilicon-based elastomers such as PDMS, urethane-based materials, polyethylene-based materials such as polyethylene terephthalate, polypropylene-based materials, polyacrylates such as polymethyl-methacrylate (PMMA), polymethacrylic acid ethylester (PMAA), polymethacrylic acid propylester (PMAP), polymethacrylic acid isopropylester, polycarbonate (PC), polyester (PES), aliphatic or (semi-)aromatic polyamides (PA), halogenated polymers such as fluoropolymers including ETFE or PTFE, polyimide (PI) as well as mixtures and/or copolymers thereof,
and/or wherein within step a) replication of the master 3D topologically structured surface (30a) is carried out using hot or cold embossing, UV embossing, UV casting, heat casting or heat and UV casting or a combination thereof,
and/or wherein the soft stamp (31) is casted or laminated on a preferably flexible support, preferably foil,
and/or wherein before step b) the soft stamp material is hardened and/or cross-linked and/or polymerized.

6. Method according to any of the preceding claims, wherein the polymerizable and/or cross-linkable organic imprint material is selected from the group consisting of: an acrylate based material including methacrylate based materials, a polyester-based material, an epoxy-based material or an urethane-based material, or mixtures and/or copolymers and/or grafter forms thereof;
and/or wherein the polymerizable and/or cross-linkable organic imprint material is a two component material, preferably based on a material selected from the group consisting of: an acrylate based material including methacrylate based materials, a polyester-based material, an epoxy-based material or an urethane-based material, or mixtures and/or copolymers and/or grafter forms thereof;
and/or wherein in step b) before or after removing said soft stamp (31) the material of the imprint (32) is cross-linked and/or polymerized using irradiation and/or heat, preferably UV irradiation,
and/or wherein in step b) the polymerizable and/or cross-linkable organic imprint material is deposited on the soft stamp (31) using a coating technique, preferably slot coating, cast coating, spin coating, spray coating or a combination thereof, and/or wherein application of the imprint (32) on the metal stamp (1) involves pressing imprint material located between the soft stamp (31) and the metal stamp (1), preferably using a tampon, preferably a deformable elastomeric tampon, and/or wherein anti-sticking material is applied to the soft stamp 3D topologically structured surface (31a) before contacting with the polymerizable and/or cross-linkable organic imprint material.

7. Method according to any of the preceding claims, wherein etch opening within step c) is carried out using a dry etching technique including reaction ion etching (RIE), wherein preferably an oxygen based plasma is used in vacuum and/or wherein the metal etching in step d) is carried out using reactive ion beam etching (RIBE) or ion beam milling (IBM) in that an argon gas is ionized and projected onto the surface of the metal stamp;
and/or wherein after step d) residual imprint if present is cleaned from the surface.

8. Method according to any of the preceding claims, wherein at least in the region of the 3D topologically structured embossing area (3) the metal stamp is made from steel, preferably hardened steel.

9. Method of generating a nano- and/or microstructure, preferably in the form of an optical diffractive element in the form of a grating, on a metal device, wherein a metal stamp (1) made using a method according to any claims 1-8 carrying a topologically structured surface (3) being essentially the negative of the nano- and/or microstructure (6) to be generated on the device (4) is embossed on an exposed metal surface of the device under plastic deformation conditions such that the topology of the topologically structured surface is imaged on the metal surface of the device (4), wherein preferably the metal stamp has a grating depth in the range of 80-500 nm, preferably in the range 200-400 nm, and more preferably in the range of 230-300 nm.

10. Method according to claim 9, wherein the metal stamp (1) at least in the region of the topologically structured surface (3) for embossing, consists of material of a higher hardness than the material of the device (4) in the exposed region to be embossed, wherein preferably the metal stamp is essentially based on hardened steel or hardened steel with a coating of tungsten carbide, Si3N4 or ZrO2.

11. Method according to any of the preceding claims 9-10, wherein the nano- and/or microstructure, preferably the grating (6), is embossed using an embossing pressure in the range of 0.1-5 kN/mm², preferably in the range 0.1-2kN/mm² and/or wherein the grating is embossed at a temperature of at most 150°C, preferably at most 100°C, preferably in the range of 10-40°C.

12. Device (4) essentially consisting of a structural load bearing part consisting of metal, with the exception of a medical prosthesis (9, 17), medical osteosynthesis device, hearing aid or hearing aid housing,
wherein the device (4, 9, 17) comprises at least one nano- and/or microstructure in the form of an optical diffractive element with a grating (6), which is directly embossed in an exposed metal surface of the load bearing part in the form of a security and/or identification element, using a metal stamp made according to any of the preceding claims 1-8 and/or using a method according to any of the preceding claims 9-11.

13. Device according to claim 12, wherein the metal of the structural load bearing part of the device is selected from steel, preferably stainless steel, or titanium or a titanium alloy with at least one of zinc, niobium, tantalum, vanadium, aluminium and wherein preferably the most protruding elevations of the nano- and/or microstructure, preferably the grating, are at the level of the surrounding surface of the structural load bearing part and with respect to the surrounding surface, or are recessed with respect to the surrounding surface by less than 40microns, preferably by less than 20 microns.

14. Device according to any of the preceding claims 12 - 13, wherein the period of the nano- and/or microstructure of the optical diffractive element with a grating (6) in the exposed metal surface of structural load bearing part of the device, preferably the grating, is in the range of 0.3-3 µm or in the range of 0.5-2 µm, preferably in the range of 1-1.9 µm or 1.7-1.9 µm
and/or wherein the depth of the nano- and/or microstructure of the optical diffractive element with a grating (6) in the exposed metal surface of structural load bearing part of the device, preferably the grating, is in the range of 80-500nm, preferably in the range of 200-400 nm, and more preferably in the range of 230-300 nm
and/or wherein the nano- and/or microstructure of the optical diffractive element with a grating (6) in the exposed metal surface of structural load bearing part of the device, preferably the grating (6), is embossed on a ground exposed metal part of the device,
and/or wherein the nano- and/or microstructure of the optical diffractive element with a grating (6) in the exposed metal surface of structural load bearing part of the device, preferably the grating (6), is embossed on an exposed metal part of the device having a surface roughness Ra, as defined according to ISO 4287:1997, of at most 0.8 µm, preferably of at most 0.5 µm or at most 0.3 µm or at most 0.23 µm, preferably in the range of 0.20-0.25 µm,
and/or wherein the nano- and/or microstructure of the optical diffractive element with a grating (6) in the exposed metal surface of structural load bearing part of the device, preferably the grating (6), is embossed using an embossing pressure in the range of 0.1-5 kN/mm², preferably in the range 0.1-2kN/mm² and/or wherein the grating of the optical diffractive element with a grating (6) in the exposed metal surface of structural load bearing part of the device is embossed at a temperature of at most 150°C, preferably at most 100°C, preferably in the range of 10-40°C,
and/or wherein the nano- and/or microstructure of the optical diffractive element with a grating (6) in the exposed metal surface of structural load bearing part of the device, preferably the grating, is provided such that the tips of the grating are essentially flush with the surface plane defined by the surrounding metal surface and/or wherein the optical diffractive element of the optical diffractive element with a grating (6) in the exposed metal surface of structural load bearing part of the device generates the image of a picture and/or letters and/or numbers and/or pictograms.

15. Device according to any of the preceding claims 12-14, wherein the device is part of or a watch, the nano- and/or microstructure, preferably the grating, being provided in particular for the track and trace or anticounterfeiting in particular of the titanium or titanium alloy parts,
part of or a surgical tool, the nano- and/or microstructure, preferably the grating, being provided in particular for the track and trace or anticounterfeiting, part of or a medical system aid that can be implanted in human body with the exception of a medical prosthesis, medical osteosynthesis device or hearing aid or hearing aid housings, the nano- and/or microstructure, preferably the grating, being provided for the track and trace or anticounterfeiting of in particular of the titanium or titanium alloy parts,
part of or an entire automotive, aeronautics, military, power plant, consumer computer device, the nano- and/or microstructure, preferably the grating, being provided in particular for the track and trace or anticounterfeiting of the in particular titanium or titanium alloy parts or for decorative purposes.

## Patentansprüche

1. Verfahren zur Herstellung eines Metallstempels (1) zum Prägen einer Nano- und/oder Mikrostruktur auf ein metallisches Bauteil (4), wobei das Verfahren mindestens die folgenden Schritte in vorgegebener Reihenfolge zur Erzeugung eines topologisch strukturierten 3D-Prägebereichs (3) auf mindestens einem Oberflächenabschnitt des Metallstempels (1) umfasst:
a) Bereitstellen eines Master-Werkzeugs (30) mit einer 3D-topologisch strukturierten Master-Oberfläche (30a), die die Nano- und/oder Mikrostruktur darstellt, und Reproduzieren der 3D-topologisch strukturierten Master-Oberfläche (30a) in der Oberfläche eines weichen Stempels (31), um eine 3D-topologisch strukturierte Oberfläche (31a) eines weichen Stempels zu bilden;
b) Ausbilden eines Abdrucks (32) auf der 3D-topologisch strukturierten Oberfläche (31a) des weichen Stempels unter Verwendung eines polymerisierbaren und/oder vernetzbaren organischen Abdruckmaterials, um eine 3D-topologisch strukturierte Abdruckoberfläche (32a) auf einer Seite des Abdrucks (32) auszubilden, bevor, während oder nachdem eine gegenüberliegende Seite des Abdrucks (32) mit dem Oberflächenabschnitt des Metallstempels (1) in Kontakt gebracht wird, und Entfernen des weichen Stempels (31), wobei die 3D-topologisch strukturierte Abdruckoberfläche (32a) freigelegt wird;
c) Ätzen der eingeprägten topologisch strukturierten 3D-Oberfläche (32a), um nur die am meisten vertieften Abschnitte der eingeprägten topologisch strukturierten 3D-Oberfläche (32a) unter Verwendung eines ersten Satzes von Ätzbedingungen wieder der Luft auszusetzen;
d) Ätzen der Metalloberfläche des Metallstempels (1) unter Verwendung eines zweiten Satzes von Ätzbedingungen, die sich von dem ersten Satz von Ätzbedingungen unterscheiden, um den topologisch strukturierten 3D-Prägebereich (3) zu bilden, wobei das Metallätzen in diesem Schritt unter Verwendung von reaktivem Ionenstrahlätzen (RIBE) oder Ionenstrahlfräsen (IBM) durchgeführt wird.

2. Verfahren nach Anspruch 1, wobei die Nano- und/oder Mikrostruktur ein optisches diffraktives Element mit einem Gitter (6) ist.

3. Verfahren nach einem der vorhergehenden Ansprüche, wobei vor Schritt a) und/oder b) der Oberflächenbereich des Metallstempels für den Prägebereich (3) poliert wird, vorzugsweise unter Verwendung mechanischer, chemischer oder kombinierter mechanischer und chemischer Poliertechniken, vorzugsweise bis eine Oberflächenrauhigkeit Ra, wie gemäß ISO 4287:1997 definiert, von höchstens 0,8 µm, vorzugsweise von höchstens 0,5 µm oder höchstens 0,3 µm oder höchstens 0,23 µm zumindest im Oberflächenbereich des Metallstempels für den Prägebereich (3) festgestellt wird.

4. Verfahren nach einem der vorhergehenden Ansprüche, wobei das Master-Werkzeug (30) aus einem Photoresist-Material, Glas, einem Nickel-Shim, einem Fused-Silica-Master, einem Sol-Gel-Replikat oder einer Kombination davon hergestellt ist.

5. Verfahren nach einem der vorhergehenden Ansprüche, wobei das Material des weichen Stempels, das vorzugsweise elastomer ist, ein polymeres oder oligomeres Material ist, ausgewählt aus der Gruppe bestehend aus: Materialien auf Silikonbasis, vorzugsweise Elastomere auf Organosilikonbasis wie PDMS, Materialien auf Urethanbasis, Materialien auf Polyethylenbasis wie Polyethylenterephthalat, Materialien auf Polypropylenbasis, Polyacrylate wie Polymethylmethacrylat (PMMA), Polymethacrylsäureethylester (PMAA), Polymethacrylsäurepropylester (PMAP), Polymethacrylsäureisopropylester, Polycarbonat (PC), Polyester (PES), aliphatische oder (halb)aromatische Polyamide (PA), halogenierte Polymere wie Fluorpolymere einschließlich ETFE oder PTFE, Polyimid (PI) sowie Mischungen und/oder Copolymere davon, und/oder wobei in Schritt a) die Replikation der topologisch strukturierten 3D-Masteroberfläche (30a) durch Heiß- oder Kaltprägung, UV-Prägung, UV-Gießen, Wärmegießen oder Wärme- und UV-Gießen oder eine Kombination davon erfolgt, und/oder wobei der weiche Stempel (31) auf einen vorzugsweise flexiblen Träger, vorzugsweise eine Folie, gegossen oder laminiert ist,
und/oder wobei vor Schritt b) das weiche Stempelmaterial gehärtet und/oder vernetzt und/oder polymerisiert wird.

6. Verfahren nach einem der vorhergehenden Ansprüche, wobei das polymerisierbare und/oder vernetzbare organische Aufdruckmaterial ausgewählt ist aus der Gruppe bestehend aus: einem Material auf Acrylatbasis, einschließlich Materialien auf Methacrylatbasis, einem Material auf Polyesterbasis, einem Material auf Epoxidbasis oder einem Material auf Urethanbasis, oder Mischungen und/oder Copolymere und/oder Grafterformen davon;
und/oder wobei das polymerisierbare und/oder vernetzbare organische Aufdruckmaterial ein Zweikomponentenmaterial ist, das vorzugsweise auf einem Material basiert, das aus der Gruppe ausgewählt ist, die besteht aus: einem Material auf Acrylatbasis, einschließlich Materialien auf Methacrylatbasis, einem Material auf Polyesterbasis, einem Material auf Epoxidbasis oder einem Material auf Urethanbasis, oder Mischungen und/oder Copolymeren und/oder Grafterformen davon;
und/oder wobei in Schritt b) vor oder nach dem Entfernen des weichen Stempels (31) das Material des Abdrucks (32) durch Bestrahlung und/oder Wärme, vorzugsweise UV-Bestrahlung, vernetzt und/oder polymerisiert wird,
und/oder wobei in Schritt b) das polymerisierbare und/oder vernetzbare organische Aufdruckmaterial auf dem weichen Stempel (31) mittels einer Beschichtungstechnik, vorzugsweise Schlitzbeschichtung, Gießbeschichtung, Schleuderbeschichtung, Sprühbeschichtung oder einer Kombination davon, abgeschieden wird,
und/oder wobei das Aufbringen des Abdrucks (32) auf den Metallstempel (1) durch Pressen von zwischen dem weichen Stempel (31) und dem Metallstempel (1) befindlichem Abdruckmaterial erfolgt, vorzugsweise unter Verwendung eines Tampons, vorzugsweise eines verformbaren Elastomertampons,
und/oder wobei auf die weiche, topologisch strukturierte 3D-Stempeloberfläche (31a) vor dem Kontakt mit dem polymerisierbaren und/oder vernetzbaren organischen Prägematerial ein Antihaftmaterial aufgebracht wird.

7. Verfahren nach einem der vorhergehenden Ansprüche, wobei die Ätzöffnung in Schritt c) unter Verwendung einer Trockenätztechnik einschließlich Reaktionsionenätzen (RIE) durchgeführt wird, wobei vorzugsweise ein Plasma auf Sauerstoffbasis im Vakuum verwendet wird.
und/oder wobei das Metallätzen in Schritt d) unter Verwendung von reaktivem Ionenstrahlätzen (RIBE) oder Ionenstrahlfräsen (IBM) durchgeführt wird, indem ein Argongas ionisiert und auf die Oberfläche des Metallstempels geschleudert wird;
und/oder wobei nach Schritt d) ein eventuell vorhandener Restaufdruck von der Oberfläche gereinigt wird.

8. Verfahren nach einem der vorhergehenden Ansprüche, wobei zumindest im Bereich der 3D-topologisch strukturierten Prägefläche (3) der Metallstempel aus Stahl, vorzugsweise aus gehärtetem Stahl, hergestellt wird.

9. Verfahren zur Erzeugung einer Nano- und/oder Mikrostruktur, vorzugsweise in Form eines optischen diffraktiven Elements in Form eines Gitters, auf einem metallischen Bauteil, wobei ein nach einem Verfahren gemäß einem der Ansprüche 1-8 hergestellter Metallstempel (1), der eine topologisch strukturierte Oberfläche (3) trägt, die im Wesentlichen das Negativ der auf dem Bauteil (4) zu erzeugenden Nano- und/oder Mikrostruktur (6) ist, unter plastischen Verformungsbedingungen auf eine freiliegende Metalloberfläche des Bauteils (4) geprägt wird, so dass die Topologie der topologisch strukturierten Oberfläche auf der Metalloberfläche des Bauteils (4) abgebildet wird, wobei vorzugsweise der Metallstempel eine Rasterungstiefe im Bereich von 80-500 nm, vorzugsweise im Bereich von 200-400 nm und besonders bevorzugt im Bereich von 230-300 nm aufweist.

10. Verfahren nach Anspruch 9, wobei der Metallstempel (1) zumindest im Bereich der zu prägenden topologisch strukturierten Oberfläche (3) aus einem Material besteht, das eine höhere Härte aufweist als das Material der Vorrichtung (4) in dem freiliegenden, zu prägenden Bereich, wobei vorzugsweise der Metallstempel im Wesentlichen auf gehärtetem Stahl oder gehärtetem Stahl mit einer Beschichtung aus Wolframkarbid, Si3N4 oder ZrO2 basiert.

11. Verfahren nach einem der vorhergehenden Ansprüche 9-10, wobei die Nano- und/oder Mikrostruktur, vorzugsweise das Gitter (6), mit einem Prägedruck im Bereich von 0,1-5 kN/mm² , vorzugsweise im Bereich von 0,1-2kN/mm² und/oder wobei das Gitter bei einer Temperatur von höchstens 150°C, vorzugsweise höchstens 100°C, vorzugsweise im Bereich von 10-40°C geprägt wird.

12. Vorrichtung (4), die im Wesentlichen aus einem tragenden Bauteil aus Metall besteht, mit Ausnahme einer medizinischen Prothese (9, 17), einer medizinischen Osteosynthesevorrichtung, eines Hörgeräts oder eines Hörgerätegehäuses,
wobei die Vorrichtung (4, 9, 17) mindestens eine Nano- und/oder Mikrostruktur in Form eines optischen Beugungselements mit einem Gitter (6) aufweist, das unter Verwendung eines Metallstempels nach einem der vorhergehenden Ansprüche 1-8 und/oder unter Verwendung eines Verfahrens nach einem der vorhergehenden Ansprüche 9-11 direkt in eine freiliegende Metalloberfläche des tragenden Teils in Form eines Sicherheits- und/oder Identifikationselements eingeprägt ist.

13. Vorrichtung nach Anspruch 12, wobei das Metall des strukturellen lasttragenden Teils der Vorrichtung ausgewählt ist aus Stahl, vorzugsweise Edelstahl, oder Titan oder einer Titanlegierung mit mindestens einem der Elemente Zink, Niob, Tantal, Vanadium, Aluminium
und wobei vorzugsweise die am weitesten vorstehenden Erhebungen der Nano- und/oder Mikrostruktur, vorzugsweise des Gitters, auf dem Niveau der umgebenden Oberfläche des tragenden Strukturteils und in Bezug auf die umgebende Oberfläche liegen oder in Bezug auf die umgebende Oberfläche um weniger als 40 Mikrometer, vorzugsweise um weniger als 20 Mikrometer, zurückgesetzt sind.

14. Vorrichtung nach einem der vorhergehenden Ansprüche 12 - 13, wobei die Periode der Nano- und/oder Mikrostruktur des optischen Beugungselements mit einem Gitter (6) in der freiliegenden Metalloberfläche des strukturellen lasttragenden Teils der Vorrichtung, vorzugsweise des Gitters, im Bereich von 0,3-3 µm oder im Bereich von 0,5-2 µm, vorzugsweise im Bereich von 1-1,9 µm oder 1,7-1,9 µm liegt,
und/oder wobei die Tiefe der Nano- und/oder Mikrostruktur des optischen Beugungselements mit einem Gitter (6) in der freiliegenden Metalloberfläche des strukturellen lasttragenden Teils der Vorrichtung, vorzugsweise des Gitters, im Bereich von 80-500 nm, vorzugsweise im Bereich von 200-400 nm und besonders bevorzugt im Bereich von 230-300 nm liegt,
und/oder wobei die Nano- und/oder Mikrostruktur des optischen Beugungselements mit einem Gitter (6) in der freiliegenden Metalloberfläche des strukturellen lasttragenden Teils der Vorrichtung, vorzugsweise des Gitters (6), auf ein geschliffenes freiliegendes Metallteil der Vorrichtung geprägt ist,
und/oder wobei die Nano- und/oder Mikrostruktur des optischen Beugungselements mit einem Gitter (6) in der freiliegenden Metalloberfläche des strukturellen lasttragenden Teils der Vorrichtung, vorzugsweise des Gitters (6), auf ein freiliegendes Metallteil der Vorrichtung geprägt ist, das eine Oberflächenrauheit Ra, wie gemäß ISO 4287:1997 definiert, von höchstens 0,8 µm, vorzugsweise von höchstens 0,5 µm oder höchstens 0,3 µm oder höchstens 0,23 µm, vorzugsweise im Bereich von 0,20-0,25 µm, aufweist,
und/oder wobei die Nano- und/oder Mikrostruktur des optischen Beugungselements mit einem Gitter (6) in der freiliegenden Metalloberfläche des tragenden Bauteils der Vorrichtung, vorzugsweise des Gitters (6), mit einem Prägedruck im Bereich von 0,1-5 kN/mm² , vorzugsweise im Bereich von 0,1-2kN/mm², geprägt wird,
und/oder wobei das Gitter des optischen Beugungselements mit einem Gitter (6) in der freiliegenden Metalloberfläche des strukturellen lasttragenden Teils der Vorrichtung bei einer Temperatur von höchstens 150°C, vorzugsweise höchstens 100°C, vorzugsweise im Bereich von 10-40°C geprägt wird,
und/oder wobei die Nano- und/oder Mikrostruktur des optischen Beugungselements mit einem Gitter (6) in der freiliegenden Metalloberfläche des strukturellen lasttragenden Teils der Vorrichtung, vorzugsweise des Gitters, so vorgesehen ist, dass die Spitzen des Gitters im Wesentlichen bündig mit der durch die umgebende Metalloberfläche definierten Oberflächenebene sind und/oder wobei das optische Beugungselement des optischen Beugungselements mit einem Gitter (6) in der freiliegenden Metalloberfläche des tragenden Teils der Vorrichtung das Bild eines Bildes und/oder Buchstaben und/oder Zahlen und/oder Piktogramme erzeugt.

15. Vorrichtung nach einem der vorangehenden Ansprüche 12-14, wobei die Vorrichtung
Teil einer Uhr ist, wobei die Nano- und/oder Mikrostruktur, vorzugsweise das Gitter, insbesondere für die Nachverfolgung oder Fälschungssicherung insbesondere der Teile aus Titan oder Titanlegierungen vorgesehen ist,
Teil oder ein chirurgisches Werkzeug ist, wobei die Nano- und/oder Mikrostruktur, vorzugsweise das Gitter, insbesondere für die Nachverfolgung oder Fälschungssicherung vorgesehen ist,
Teil oder Hilfsmittel eines medizinischen Systems ist, das in den menschlichen Körper implantiert werden kann, mit Ausnahme einer medizinischen Prothese, eines medizinischen Osteosynthesegeräts oder eines Hörgeräts oder Hörgerätegehäuses, wobei die Nano- und/oder Mikrostruktur, vorzugsweise das Gitter, für die Nachverfolgung oder Fälschungssicherung insbesondere der Teile aus Titan oder Titanlegierungen vorgesehen ist,
Teil oder ein ganzes Automobil-, Luftfahrt-, Militär-, Kraftwerks-, Verbraucher Computergerätes ist, wobei die Nano- und/oder Mikrostruktur, vorzugsweise das Gitter, insbesondere für die Nachverfolgung oder Fälschungssicherung der insbesondere Titan- oder Titan- oder Titanlegierungsteilen oder zu dekorativen Zwecken vorgesehen ist.

## Revendications

1. Procédé de fabrication d'un tampon métallique (1) pour l'estampage d'une nanostructure et/ou d'une microstructure sur un dispositif métallique (4), dans lequel le procédé comprend au moins les étapes suivantes dans un ordre donné pour produire une zone d'estampage à structure topologique 3D (3) sur au moins une partie de la surface du tampon métallique (1) :
a) fournir un outil maître (30) ayant une surface topologique 3D maîtresse (30a) représentant ladite nanostructure et/ou microstructure, et reproduire ladite surface topologique 3D maîtresse (30a) dans la surface d'un tampon souple (31) pour former une surface topologique 3D de tampon souple (31a) ;
b) former une empreinte (32) sur la surface topologiquement structurée en 3D du tampon souple (31a) à l'aide d'un matériau organique polymérisable et/ou réticulable pour former une surface topologiquement structurée en 3D (32a) sur une face de l'empreinte (32), avant, pendant ou après la mise en contact d'une face opposée de l'empreinte (32) avec ladite partie de la surface du tampon métallique (1), et retirer ledit tampon souple (31) en exposant ladite surface topologiquement structurée en 3D (32a) de l'empreinte ;
c) ouverture par gravure de ladite surface topologiquement structurée en 3D (32a) pour exposer à l'air uniquement les parties les plus en retrait de la surface topologiquement structurée en 3D (32a) à l'aide d'un premier ensemble de conditions de gravure ;
d) en utilisant un deuxième ensemble de conditions de gravure, différent du premier ensemble de conditions de gravure, graver la surface métallique du poinçon métallique (1) pour former ladite zone de gaufrage à structure topologique 3D (3), la gravure du métal dans cette étape étant effectuée à l'aide d'une gravure par faisceau d'ions réactifs (RIBE) ou d'un fraisage par faisceau d'ions (IBM).

2. Méthode selon la revendication 1, dans laquelle la nano- et/ou microstructure est un élément diffractif optique avec un réseau (6).

3. Procédé selon l'une quelconque des revendications précédentes, dans lequel, avant l'étape a) et/ou b), la surface du tampon métallique pour la zone de gaufrage (3) est polie, de préférence à l'aide de techniques de polissage mécanique, chimique ou combinant mécanique et chimique, de préférence jusqu'à ce qu'une rugosité de surface Ra, telle que définie selon la norme ISO 4287:1997, d'au plus 0,8 µm, de préférence d'au plus 0,5 µm ou d'au plus 0,3 µm ou d'au plus 0,23 µm soit établie au moins dans la surface du tampon métallique pour la zone de gaufrage (3).

4. Méthode selon l'une quelconque des revendications précédentes, dans laquelle l'outil maître (30) est fabriqué à partir d'un matériau photorésistant, de verre, d'une cale en nickel, d'un maître en silice fondue, d'une réplique sol-gel ou d'une combinaison de ceux-ci.

5. Procédé selon l'une quelconque des revendications précédentes, dans lequel le matériau du tampon souple, qui est de préférence élastomère, est un matériau polymère ou oligomère choisi dans le groupe constitué par : les matériaux à base de silicium, de préférence les élastomères à base d'organosilicium tels que le PDMS, les matériaux à base d'uréthane, les matériaux à base de polyéthylène tels que le polyéthylène téréphtalate, les matériaux à base de polypropylène, les polyacrylates tels que le polyméthacrylate de méthyle (PMMA), l'ester éthylique d'acide polyméthacrylique (PMAA), l'ester propylique de l'acide polyméthacrylique (PMAP), l'ester isopropylique de l'acide polyméthacrylique, le polycarbonate (PC), le polyester (PES), les polyamides aliphatiques ou (semi-)aromatiques (PA), les polymères halogénés tels que les polymères fluorés, notamment l'ETFE ou le PTFE, le polyimide (PI), ainsi que leurs mélanges et/ou leurs copolymères,
et/ou dans lequel, à l'étape a), la réplication de la surface topologique 3D maîtresse (30a) est réalisée par gaufrage à chaud ou à froid, gaufrage UV, coulage UV, coulage à chaud ou coulage à chaud et à UV, ou une combinaison de ces procédés, et/ou dans lequel le tampon souple (31) est coulé ou laminé sur un support de préférence souple, de préférence une feuille d'aluminium,
et/ou dans lequel, avant l'étape b), le matériau souple du tampon est durci et/ou réticulé et/ou polymérisé.

6. Procédé selon l'une quelconque des revendications précédentes, dans lequel le matériau d'impression organique polymérisable et/ou réticulable est choisi dans le groupe constitué par : un matériau à base d'acrylate, y compris les matériaux à base de méthacrylate, un matériau à base de polyester, un matériau à base d'époxy ou un matériau à base d'uréthane, ou des mélanges et/ou des copolymères et/ou des formes de greffons de ceux-ci ;
et/ou dans lequel le matériau d'impression organique polymérisable et/ou réticulable est un matériau à deux composants, de préférence à base d'un matériau choisi dans le groupe consistant en : un matériau à base d'acrylate, y compris les matériaux à base de méthacrylate, un matériau à base de polyester, un matériau à base d'époxy ou un matériau à base d'uréthane, ou des mélanges et/ou des copolymères et/ou des formes de greffons de ceux-ci ;
et/ou dans lequel, à l'étape b), avant ou après avoir retiré ledit tampon souple (31), le matériau de l'empreinte (32) est réticulé et/ou polymérisé par irradiation et/ou chaleur, de préférence par irradiation UV,
et/ou dans lequel, à l'étape b), le matériau d'impression organique polymérisable et/ou réticulable est déposé sur le tampon souple (31) à l'aide d'une technique d'enduction, de préférence l'enduction par fente, l'enduction par coulée, l'enduction par centrifugation, l'enduction par pulvérisation ou une combinaison de ces techniques,
et/ou dans lequel l'application de l'empreinte (32) sur le tampon métallique (1) implique de presser le matériau d'empreinte situé entre le tampon souple (31) et le tampon métallique (1), de préférence à l'aide d'un tampon, de préférence un tampon élastomère déformable,
et/ou dans lequel un matériau antiadhésif est appliqué sur la surface topologique 3D du tampon souple (31a) avant la mise en contact avec le matériau d'impression organique polymérisable et/ou réticulable.

7. Méthode selon l'une quelconque des revendications précédentes, dans laquelle l'ouverture de la gravure à l'étape c) est effectuée à l'aide d'une technique de gravure sèche, y compris la gravure par réaction ionique (RIE), dans laquelle on utilise de préférence un plasma à base d'oxygène sous vide.
et/ou dans lequel la gravure du métal à l'étape d) est effectuée à l'aide d'une gravure par faisceau d'ions réactifs (RIBE) ou d'un fraisage par faisceau d'ions (IBM) dans lequel un gaz argon est ionisé et projeté sur la surface du poinçon métallique ; et/ou dans lequel, après l'étape d), l'empreinte résiduelle, si elle est présente, est nettoyée de la surface.

8. Procédé selon l'une quelconque des revendications précédentes, dans lequel, au moins dans la région de la zone de gaufrage à structure topologique 3D (3), le tampon métallique est en acier, de préférence en acier trempé.

9. Procédé de génération d'une nano- et/ou microstructure, de préférence sous la forme d'un élément optique diffractif en forme de réseau, sur un dispositif métallique, dans lequel un tampon métallique (1) fabriqué à l'aide d'un procédé selon l'une des revendications 1-8 portant une surface topologiquement structurée (3) étant essentiellement le négatif de la nano- et/ou microstructure (6) à générer sur le dispositif (4) est estampé sur une surface métallique exposée du dispositif dans des conditions de déformation plastique de telle sorte que la topologie de la surface topologiquement structurée est imagée sur la surface métallique du dispositif (4), où, de préférence, le tampon métallique a une profondeur de réseau comprise entre 80 et 500 nm, de préférence entre 200 et 400 nm, et plus préférentiellement entre 230 et 300 nm.

10. Procédé selon la revendication 9, dans lequel le poinçon métallique (1), au moins dans la zone de la surface topologiquement structurée (3) pour le gaufrage, est constitué d'un matériau d'une dureté supérieure à celle du matériau du dispositif (4) dans la zone exposée à gaufrer, le poinçon métallique étant de préférence essentiellement à base d'acier trempé, ou d'acier trempé avec un revêtement de carbure de tungstène, de Si3N4 ou de ZrO2.

11. Méthode selon l'une des revendications précédentes 9-10, dans laquelle la nano-et/ou microstructure, de préférence le réseau (6), est gaufrée à l'aide d'une pression de gaufrage comprise entre 0,1 et 5 kN/mm² , de préférence entre 0,1 et 2 kN/mm.² et/ou dans lequel le réseau est gaufré à une température maximale de 150°C, de préférence maximale de 100°C, de préférence comprise entre 10 et 40°C.

12. Dispositif (4) consistant essentiellement en une pièce structurelle portante en métal, à l'exception d'une prothèse médicale (9, 17), d'un dispositif médical d'ostéosynthèse, d'une prothèse auditive ou d'un boîtier de prothèse auditive,
dans lequel le dispositif (4, 9, 17) comprend au moins une nano et/ou microstructure sous la forme d'un élément optique diffractif avec un réseau (6), qui est directement embossé dans une surface métallique exposée de la partie porteuse sous la forme d'un élément de sécurité et/ou d'identification, en utilisant un tampon métallique fabriqué selon l'une des revendications précédentes 1-8 et/ou en utilisant une méthode selon l'une des revendications précédentes 9-11.

13. Dispositif selon la revendication 12, dans lequel le métal de la partie structurelle portante du dispositif est choisi parmi l'acier, de préférence l'acier inoxydable, ou le titane ou un alliage de titane avec au moins un des éléments suivants : zinc, niobium, tantale, vanadium, aluminium, etc.
et dans lequel, de préférence, les élévations les plus saillantes de la nanostructure et/ou de la microstructure, de préférence la grille, sont au niveau de la surface environnante de la partie structurelle porteuse et par rapport à la surface environnante, ou sont en retrait par rapport à la surface environnante de moins de 40 microns, de préférence de moins de 20 microns.

14. Dispositif selon l'une des revendications précédentes 12 - 13, dans lequel la période de la nano- et/ou microstructure de l'élément optique diffractif avec un réseau (6) dans la surface métallique exposée de la partie structurelle portante du dispositif, de préférence le réseau, est de l'ordre de 0,3-3 µm ou de l'ordre de 0,5-2 µm, de préférence de l'ordre de 1-1,9 µm ou de 1,7-1,9 µm.
et/ou dans lequel la profondeur de la nanostructure et/ou de la microstructure de l'élément optique diffractif à réseau (6) dans la surface métallique exposée de la partie structurelle portante du dispositif, de préférence le réseau, est comprise entre 80 et 500 nm, de préférence entre 200 et 400 nm, et plus préférentiellement entre 230 et 300 nm.
et/ou dans lequel la nanostructure et/ou la microstructure de l'élément optique diffractif avec un réseau (6) dans la surface métallique exposée de la partie structurelle portante du dispositif, de préférence le réseau (6), est embossée sur une partie métallique exposée au sol du dispositif,
et/ou dans lequel la nano et/ou microstructure de l'élément optique diffractif avec un réseau (6) dans la surface métallique exposée de la partie structurelle portante du dispositif, de préférence le réseau (6), est embossée sur une partie métallique exposée du dispositif ayant une rugosité de surface Ra, telle que définie selon ISO 4287: 1997, d'au plus 0,8 µm, de préférence d'au plus 0,5 µm ou d'au plus 0,3 µm ou d'au plus 0,23 µm, de préférence dans la plage de 0,20 à 0,25 µm,
et/ou dans lequel la nano et/ou microstructure de l'élément optique diffractif avec un réseau (6) dans la surface métallique exposée de la partie structurelle portante du dispositif, de préférence le réseau (6), est gaufrée en utilisant une pression de gaufrage dans la plage de 0,1-5 kN/mm² , de préférence dans la plage de 0,1-2kN/mm²
et/ou dans lequel le réseau de l'élément optique diffractif avec un réseau (6) dans la surface métallique exposée de la partie structurelle portante du dispositif est embossé à une température d'au plus 150°C, de préférence d'au plus 100°C, de préférence dans la plage de 10-40°C,
et/ou dans lequel la nanostructure et/ou la microstructure de l'élément optique diffractif avec un réseau (6) dans la surface métallique exposée de la partie structurelle portante du dispositif, de préférence le réseau, est telle que les pointes du réseau sont essentiellement alignées avec le plan de surface défini par la surface métallique environnante
et/ou dans lequel l'élément optique diffractif de l'élément optique diffractif avec un réseau (6) dans la surface métallique exposée de la partie structurelle portante du dispositif génère l'image d'une image et/ou de lettres et/ou de chiffres et/ou de pictogrammes.

15. Dispositif selon l'une des revendications précédentes 12-14, dans lequel le dispositif est
ou d'une montre, la nano- et/ou microstructure, de préférence le réseau, étant prévue notamment pour la traçabilité ou l'anti-contrefaçon notamment des pièces en titane ou en alliage de titane,
partie ou outil chirurgical, la nano- et/ou microstructure, de préférence le réseau,
étant prévue notamment pour le suivi et la traçabilité ou la lutte contre la contrefaçon,
partie d'un système médical ou aide médicale pouvant être implantée dans le corps humain, à l'exception d'une prothèse médicale, d'un dispositif médical d'ostéosynthèse ou d'un appareil auditif ou d'un boîtier d'appareil auditif, la nanostructure et/ou la microstructure, de préférence le réseau, étant prévue pour le suivi et la traçabilité ou la lutte contre la contrefaçon, en particulier des pièces en titane ou en alliage de titane,
une partie ou la totalité d'un dispositif automobile, aéronautique, militaire, d'une centrale électrique, d'un ordinateur grand public, la nano et/ou microstructure, de préférence le réseau, étant prévue notamment pour le suivi et la traçabilité ou la lutte contre la contrefaçon des pièces en titane ou en alliage de titane en particulier, ou à des fins décoratives.
